Europäisches Patentamt

European Patent Office

Office européen des brevets

(11) Veröffentlichungsnummer: 0 299 159
A2

## (12) EUROPÄISCHE PATENTANMELDUNG

(21) Anmeldenummer: 88107004.9

(22) Anmeldetag: 02.05.88

(51) Int. Cl.⁴ G02B 6/28

(30) Priorität: 14.07.87 DE 3723170

(43) Veröffentlichungstag der Anmeldung:
18.01.89 Patentblatt 89/03

(84) Benannte Vertragsstaaten:
BE DE ES FR GB IT NL SE

(71) Anmelder: AEG KABEL Aktiengesellschaft
Bonnenbroicher Strasse 2-14
D-4050 Mönchengladbach 2(DE)

(72) Erfinder: Eickhoff, Wolfgang, Dr.
Annakirchstrasse 140c
D-4050 Mönchengladbach 1(DE)

(74) Vertreter: Langer, Karl-Heinz, Dipl.-Ing.
Licentia Patent-Verwaltungs-GmbH
Theodor-Stern-Kai 1
D-6000 Frankfurt/Main 70(DE)

(54) Optischer Sternkoppler.

(57) Bei einem optischen Sternkoppler mit einem Mischerstab, in den Licht, welches durch Lichtwellenleiter übertragen wird, ein- und ausgekoppelt wird, und mit einer Aufnahme für die angekoppelten Lichtwellenleiter, ist vorgesehen, daß die Ebene, in der die Enden der angekoppelten Lichtwellenleiter liegen, verspiegelt ist, wobei jedoch die verspiegelte Fläche unverspiegelte Bereiche für die Lichtwellenleiter aufweist.

FIG.4

EP 0 299 159 A2

## Optischer Sternkoppler

Die Erfindung betrifft einen optischen Sternkoppler mit einem Mischerstab, in den Licht, welches durch Lichtwellenleiter übertragen wird, ein- und ausgekoppelt wird, und mit einer Aufnahme für die angekoppelten Lichtwellenleiter.

Lokale Netze zu Kommunikation mehrerer Teilnehmer (z. B. Computer) miteinander gewinnen immer mehr an Bedeutung. Eine mögliche Netztopologie ist ein Sternnetz. Bei diesem System wird ein Sternkoppler benötigt, der das in n Senderfasern ankommende Licht auf m Empfangsfasern aufteilt.

Ein Sternkoppler kann einen sogenannten Mischerstab aufweisen, der die Aufgabe hat, Licht, welches durch Lichtwellenleiter in ihn eingekoppelt wird, auf einen oder mehrere Lichtwellenleiter zu übertragen. Der Mischerstab besteht aus einem optisch transparenten Material wie z. B. Glas.

Ein Sternkoppler funktioniert wie folgt. An das eine Ende eines Mischerstabes sind einkoppelnde Lichtwellenleiter angekoppelt, die in einer Aufnahme oder Halterung gehaltert sind. Diese einkoppelnden Lichtwellenleiter speisen Licht in den Mischerstab ein, welches bis zum anderen Ende des Mischerstabes läuft. Es gibt nun zwei Möglichkeiten zur Auskopplung des eingekoppelten Lichtes. Bei der einen Ausführungsform sind auskoppelnde Lichtwellenleiter vorgesehen, die ebenso wie die einkoppelnden Lichtwellenleiter an den Mischerstab angekoppelt sind. Bei dieser Ausführungsform wird das durch die einkoppelnden Lichtwellenleiter eingekoppelte Licht auf die auskoppelnden Lichtwellenleiter aufgeteilt. Es besteht jedoch auch die Möglichkeit, auf besonders auskoppelnde Lichtwellenleiter zu verzichten und die einkoppelnden Lichtwellen leiter zugleich als auskoppelnde Lichtwellenleiter zu verwenden. Bei dieser Ausführungsform ist es erforderlich, die der Einkoppelseite gegenüberliegende (andere) Endfläche des Mischerstabes zu verspiegeln, damit das eingekoppelte Licht an dieser Endfläche gespiegelt und auf die einkoppelnde Seite zur Aufteilung auf die einkoppelnden Lichtwellenleiter, die dann zugleich die Funktion auskoppelnder Lichtwellenleiter haben, zurückgeworfen wird. Bei dieser Ausführungsform, bei der die eine Seite des Mischerstabes verspiegelt ist, sind die Lichtwellenleiter sowohl Sende- als auch Empfangs-Lichtwellenleiter.

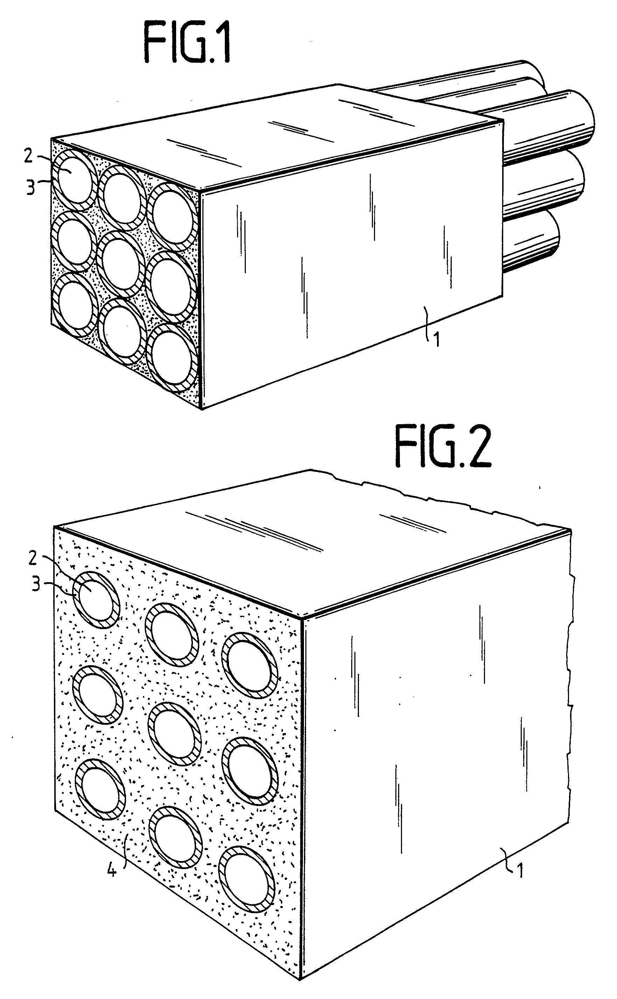

Die Figur 1 zeigt eine Aufnahme bzw. Halterung 1 für Lichtwellenleiter bei einem bekannten Sternkoppler. Da die Lichtwellenleiter, die im allgemeinen aus einem Kern 2 und einem Mantel 3 bestehen, bekanntlich rund sind, weisen gebündelte Lichtwellenleiter unvermeidlich Zwischenräume auf, die zu optischen Energieverlusten führen. Zur Vermeidung solcher Verluste müssen die Lichtwellenleiter sehr eng gebündelt sein, damit die Zwischenräume zwischen den Lichtwellenleitern möglichst klein sind. Die bekannten Sternkoppler haben den weiteren Nachteil, daß die Kantenlänge des Mischerstabes ein kritischer Parameter ist und daß außerdem die Justage zwischen Mischerstab und Lichtwellenleiterbündel kritisch ist.

Der Etfindung liegt die Aufgabe zugrunde, einen Sternkoppler anzugeben, der die Justage zwischen dem Lichtwellenleiterbündel und dem Mischerstab vereinfacht und der größere mechanische Toleranzen zuläßt als bekannte Sternkoppler. Diese Aufgabe wird bei einem optischen Sternkoppler der eingangs erwähnten Art durch die kennzeichnenden Merkmale des Anspruchs 1 gelöst.

Die Erfindung wird im folgenden an Ausführungsbeispielen erläutert. Die Figur 2 zeigt eine Lichtwellenleiterhalterung 1 bei einem Sternkoppler nach der Erfindung mit Lichtwellenleitern (2, 3), die in die Halterung 1 eingebettet sind. Gemäß der Erfindung ist die Endfläche 4 der Halterung 1 und damit die Ebene, in der die Enden der Lichtwellenleiter (2, 3) liegen, verspiegelt, jedoch mit Ausnahme von Fensterbereichen, in denen die in die Halterung 1 eingebetteten Lichtwellenleiter (2, 3) an die Oberfläche treten. Die Lichtwellenleiter bestehen aus einem Kern 2 und einem den Kern umgebenden Mantel 3.

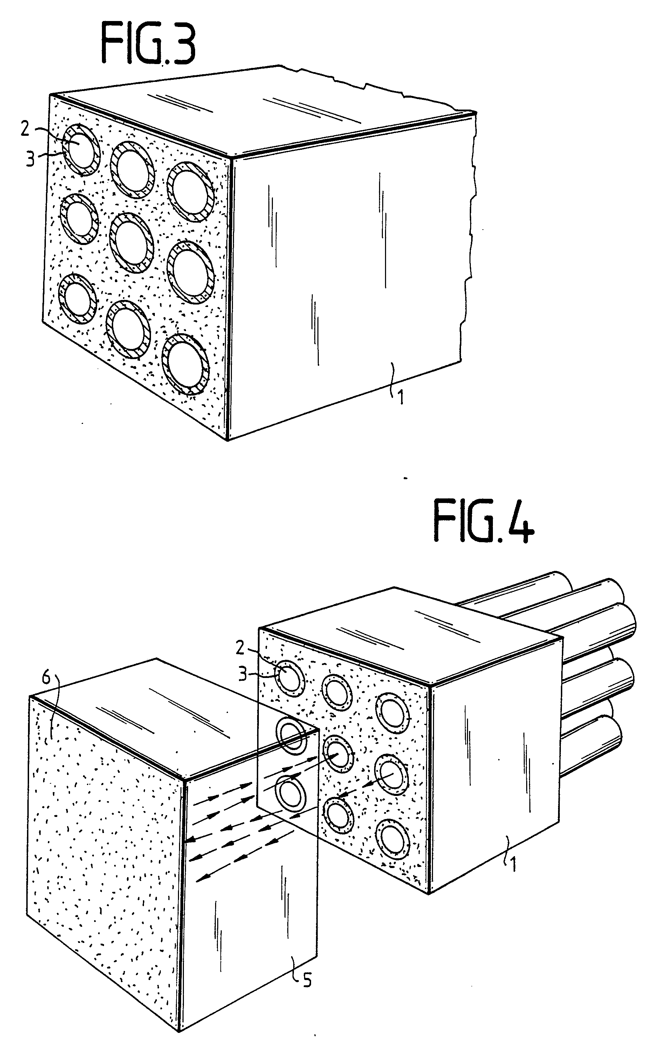

Während beim Ausführungsbeispiel der Figur 2 die Kerne 2 und die Mäntel 3 der Lichtwellenleiter nicht verspiegelt sind und damit nur die Zwischenräume zwischen den Lichtwellenleitern verspiegelt sind, sind beim Ausführungsbeispiel der Figur 3 zusätzlich zu den Zwischenräumen zwischen den Lichtwellenleitern auch noch die Mäntel 3 der Lichtwellenleiter verspiegelt. Die Verspiegelung der Mäntel 3 der Lichtwellenleiter bringt eine zusätzliche Reduzierung der Verlustleistung.

Wie die Ausführungsbeispiele der Figuren 2 und 3 zeigen, ist
- die genaue Lage der Lichtwellenleiter in der Aufnahme unkritisch
- die Größe und Form des Mischerstabes unkritisch,
- die Justage des Mischerstabes zu den angekoppelten Lichtwellenleitern unkritisch.

Es muß nur gewährleistet sein, daß alle angekoppelten Lichtwellenleiter irgendwo auf den Mischerstab treffen und daß die gesamte restliche Fläche, auf die der Mischerstab auftrifft, verspiegelt ist.

Die Halterung 1 besteht beispielsweise aus einem Kupferkörper mit Bohrungen, in die die Lichtwellenleiter, beispielsweise mittels eines Klebers, eingegossen werden. Die Verspiegelung der Endfläche der Halterung erfolgt beispielsweise dadurch, daß die Endfläche so lange poliert wird, bis sie spiegelt. Die Verspiegelung kann auch dadurch erfolgen, daß auf die zu verspiegelnde Endfläche eine Metallschicht oder eine dielektrische Schicht aufgebracht wird. Als Metall kann beispielsweise Silber oder Gold verwendet werden. Die Metallwahl hängt von der verwendeten Lichtwellenlänge ab.

Es besteht natürlich auch die Möglichkeit, die den Enden der Lichtwellenleiter zugewandte Endfläche des Mischerstabes zu verspiegeln oder sowohl diese Endfläche als auch die dem Mischerstab zugewandte Endfläche der Halterung zu verspiegeln.

Die Figur 4 zeigt die Halterung 1 sowie den Mischerstab 5 mit dem die Lichtwellenleiter (2, 3) und damit die Halterung 1 gekoppelt werden. Da bei dem Sternkoppler der Figur 2 keine zweite Halterung mit auskoppelnden Lichtwellenleitern vorgesehen ist, ist die den Lichtwellenleitern der Halterung 1 abgewandte Endfläche 6 des Mischerstabes 5 verspiegelt. Ohne Verspiegelung dieser Endfläche ist eine zweite Halterung mit auskoppelnden Lichtwellenleitern erforderlich.

Schichten, die eine Verspiegelung bewirken, können beispielsweise mittels der Photolithographie aufgebracht werden. Bei diesem Verfahren wird zunächst auf die zu verspiegelnde Fläche eine Photolackschicht aufgebracht, diese an den Stellen belichtet (oder umgekehrt), an denen keine Verspiegelung erfolgen soll, und anschließend wird der Photolack an den Stellen, an denen die Verspiegelung vorgesehen ist, entfernt. Dann kann die für die Verspiegelung vorgesehene Schicht aufgebracht werden. Die Belichtung der Photolackschicht kann vorzugsweise durch die eingebrachten Lichtwellenleiter selbst erfolgen, so daß nur die Kerne der Lichtwellenleiter nicht verspiegelt sind.

Im idealen Fall, d. h. keine Verluste im Mischerstab, Reflexionsfaktor der verspiegelten Fläche gleich eins, großes Verhältnis von Spiegel zu gesamter Faserfläche, teilt sich das eingestrahlte Licht gleichmäßig auf alle Fasern auf.

Für reale Verhältnisse ergibt sich mit folgenden Parametern

$t$: Transmission des Mischerstabes ($0 \leq t \leq 1$)

$r$: Reflexionsfaktor der Endflächen ($0 \leq r \leq 1$)

$F$: Fläche des Mischerstabes

$A$: Fläche einer Einzelfaser

$n$: Zahl der Eingangs- bzw. Ausgangsfasern

$P_o$: eingestrahlte Leistung

für die Leistung in jeder Faser der Ausgangsseite

$$Pa = Po \; \frac{t \; A}{F \left[ 1 - t^2 r^2 \, (1 - nA/F)^2 \right]}$$

und für die Leistung in jeder Faser der Eingangsseite

$$Pe = \frac{t^2 \; r \; A \; (1 - nA/F)}{F \left[ 1 - t^2 r^2 \, (1 - nA/F)^2 \right]}$$

## Ansprüche

1. Optischer Sternkoppler mit einem Mischerstab, in den Licht, welches durch Lichtwellenleiter übertragen wird, ein- und ausgekoppelt wird, und mit einer Aufnahme für die angekoppelten Lichtwellenleiter, dadurch gekennzeichnet, daß die Ebene, in der die Enden der angekoppelten Lichtwellenleiter liegen, verspiegelt ist, wobei jedoch die verspiegelte Fläche unverspiegelte Bereiche für die Lichtwellenleiter aufweist.

2. Optischer Sternkoppler nach Anspruch 1, dadurch gekennzeichnet, daß die Endfläche der Aufnahme verspiegelt ist, in der die Enden der angekoppelten Lichtwellenleiter liegen.

3. Optischer Sternkoppler nach Anspruch 1 oder 2, dadurch gekennzeichnet, daß an den beiden Seiten des Mischerstabes eine unterschiedliche Zahl von Lichtwellenleitern angekoppelt wird, wobei als Spezialfall eine Seite auch voll verspiegelt sein kann.

4. Optischer Sternkoppler nach einem der Ansprüche 1 bis 3, dadurch gekennzeichnet, daß die Lichtwellenleiter aus einem Kern und einem Mantel bestehen und daß außer den Zwischenräumen zwischen den angekoppelten Lichtwellenleitern auch die Mäntel der angekoppelten Lichtwellenleiter verspiegelt sind.

5. Optischer Sternkoppler nach einem der Ansprüche 1 bis 4, dadurch gekennzeichnet, daß die verspiegelten Bereiche durch Polieren oder Glanzdrehen verspiegelt sind.

6. Optischer Sternkoppler, nach einem der Ansprüche 1 bis 5, dadurch gekennzeichnet, daß die Verspiegelung durch Aufbringen von Metall- oder dielektrischen Schichten erfolgt.

7. Optischer Sternkoppler nach einem der Ansprüche 1 bis 6, dadurch gekennzeichnet, daß die zur Verspiegelung vorgesehenen Schichten unter Zuhilfenahme von Photolithographie aufgebracht sind, wobei die Belichtung durch die Lichtwellenleiter selbst erfolgt.

# FIG.1

# FIG.2

# FIG.3

# FIG.4